# EUROPEAN PATENT APPLICATION

(11) **EP 4 482 007 A1**
(43) Date of publication of application: **25.12.2024**
(21) Application number: 24183800.2
(22) Date of filing: 21.06.2024
(51) Int. Cl.: H02M 1/00, B60L 53/20, B60L 55/00, H02J 7/02, H02M 1/10, H02M 1/42, H02M 3/00, H02M 3/158, H02M 3/28, H02M 3/335, H02M 7/219

(54) **POWER CONVERSION DEVICE AND CONTROL METHOD THEREOF, AND ELECTRIC VEHICLE CHARGING SYSTEM**

(30) Priority: 21.06.2023 CN 202310747042
(71) Applicant: ABB E-mobility B.V., 2629 JG Delft (NL)
(72) Inventor: YUEN, Ken-KuenFaat, Hong Kong, 000000 (CN); TANG, Yin, Shenzhen, 518052 (CN); ZHANG, Felix-Fan, Shenzhen, 518118 (CN); SITU, Qin, Shenzhen, 518000 (CN)
(74) Representative: Zimmermann & Partner Patentanwälte mbB

(57) **Abstract**

Embodiments of the present disclosure provide a power conversion device, an electric vehicle charging system, and a method of controlling the power conversion device. The power conversion device includes: a first power converter and a second power converter; a resonant converter coupled between the first power converter and the second power converter; and a controller configured to: control, based on voltage information associated with the power conversion device, the first power converter to perform conversion between an AC voltage or a first DC voltage and a second DC voltage; control the resonant converter to operate at a predetermined resonant frequency to perform conversion between the second DC voltage and a third DC voltage; and control, based on the voltage information, the second power converter to perform conversion between the third DC voltage and a fourth DC voltage. The solution the present disclosure can improve the efficiency of the power conversion device and the charging system, and expanding the application range and the scenarios.

## Description

### FIELD

Embodiments of the present disclosure generally relate to the field of power electronics, and specifically to a power conversion device, an electric vehicle charging system, and a method of controlling the power conversion device.

### BACKGROUND

In order to reduce carbon emissions and mitigate climate changes, development and popularity of new energy vehicles such as electric vehicles, or the like, have been promoted continuously. The electric vehicles are mainly powered by rechargeable energy storage devices therein, without requiring fossil energy. When the power of the rechargeable energy storage device is insufficient or has run out, the energy storage device of the vehicle can be charged via a charger or charging system. The charger or charging system converts power from a power source such as utility grid, or the like, and provides the power to the new energy vehicles such as electric cars, or the like.

The current charger or charging system still has a lot of shortcomings. For example, the charger or charging system has small input and output voltage ranges and a low rated power level, or the charger or charging system has a quite low efficiency in the case of a great voltage range, which restricts the application range of the charger and the charging system. Moreover, with the development of technologies, in addition to charging vehicles, there arise needs for new functions of the charger or charging system, for example, stabilizing the grid, assisting in power generation and energy storage, and the like. However, the current charger or charging system cannot meet those new needs as transmitting power only in one direction and being limited by the input and output voltages.

### SUMMARY

In order to at least partly solve the above-mentioned problem and other possible problems, embodiments of the present disclosure provide a power conversion device, an electric vehicle charging system comprising the power conversion device, and a method for controlling the power conversion device.

In a first aspect of the present disclosure, there is provided a power conversion device. The power conversion device includes: a first power converter and a second power converter; a resonant converter coupled between the first power converter and the second power converter, the resonant converter comprising an isolation transformer; and a controller coupled to the first power converter, the second power converter, and the resonant converter, the controller configured to: control, based on voltage information associated with the power conversion device, the first power converter to perform conversion between an AC voltage or a first DC voltage and a second DC voltage; control the resonant converter to operate at a predetermined resonant frequency to perform conversion between the second DC voltage and a third DC voltage; and control, based on the voltage information, the second power converter to perform conversion between the third DC voltage and a fourth DC voltage.

In some embodiments of the present disclosure, a ratio between the second DC voltage and the third DC voltage is of a fixed value, and associated with a transformation ratio of the isolation transformer.

In some embodiments of the present disclosure, the controller is configured to: in a case where an AC power source is coupled to the first power converter, control the first power converter to perform AC-to-DC conversion and power factor correction for the AC-to-DC conversion; and in a case where a DC power source is coupled to the first power converter, control the first power converter to perform DC-to-DC conversion.

In some embodiments of the present disclosure, the first power converter comprises a plurality of first half-bridge branches, and wherein the controller is configured to control the plurality of first half-bridge branches to perform multiphase interleaved DC-to-DC conversion in the case where the DC power source is coupled to the first power converter.

In some embodiments of the present disclosure, the AC power source comprises a three-phase AC power source, or a single-phase AC power source.

In some embodiments of the present disclosure, the power conversion device further comprises: a switch assembly coupled to the first power converter and configured to switchably couple the AC power source or the DC power source to the first power converter to respectively provide the AC voltage or the first DC voltage.

In some embodiments of the present disclosure, the power conversion device further comprises: a filter coupled between the AC power source and the first power converter.

In some embodiments of the present disclosure, the resonant converter comprises a first bridge circuit and a first resonant capacitor located on a primary side of the isolation transformer, and a second bridge circuit and a second resonant capacitor located on a secondary side of the isolation transformer, and wherein the controller is configured to: determine the predetermined resonant frequency based on a capacitance of the first resonant capacitor or the second resonant capacitor, and a leakage inductance of the isolation transformer, and control the resonant converter to transmit power at the predetermined resonant frequency between the primary side and the secondary side of the isolation transformer.

In some embodiments of the present disclosure, the first bridge circuit and the second bridge circuit comprise insulated-gate bipolar transistors.

In some embodiments of the present disclosure, the resonant converter comprises a plurality of resonant conversion units connected in parallel with one another, and wherein the controller is configured to control the plurality of resonant conversion units to operate in a multiphase interleaved manner.

In some embodiments of the present disclosure, the second power converter comprises a plurality of second half-bridge circuits, and wherein the controller is configured to control the plurality of second half-bridge branches to perform multiphase interleaved DC-to-DC conversion.

In some embodiments of the present disclosure, the resonant converter comprises bypass switches that are coupled between the first power converter and the second power converter, and configured to couple the first power converter to the second power converter when the bypass switches are switched on.

In a second aspect of the present disclosure, there is provided a charging system for an electric vehicle, the charging system comprising: the power conversion device of the first aspect of the present disclosure; and a charging interface coupled to the power conversion device to output converted power.

In a third aspect of the present disclosure, there is provided a method for controlling a power conversion device, comprising: controlling, based on voltage information associated with the power conversion device, a first power converter of the power conversion device to perform conversion between an AC voltage or a first DC voltage and a second DC voltage; controlling a resonant converter of the power conversion device to operate at a predetermined resonant frequency to perform conversion between the second DC voltage and a third DC voltage, the resonant converter comprising an isolation transformer; and controlling, based on the voltage information, a second power converter of the power conversion device to perform conversion between a third DC voltage and a fourth DC voltage, the resonant converter coupled between the first power converter and the second power converter.

In some embodiments of the present disclosure, a ratio between the second DC voltage and the third DC voltage is of a fixed value, and associated with a transformation ratio of the isolation transformer.

In some embodiments of the present disclosure, controlling the first power converter of the power conversion device to perform conversion between the AC voltage or the first DC voltage and the second DC voltage comprises: in a case where an AC power source is coupled to the first power converter, controlling the first power converter to perform AC-to-DC conversion and power factor correction for the AC-to-DC conversion; and in a case where a DC power source is coupled to the first power converter, controlling the first power converter to perform DC-to-DC conversion.

In some embodiments of the present disclosure, controlling the first power converter to perform the DC-to-DC conversion comprises: controlling a plurality of first half-bridge branches of the first power converter to perform multiphase interleaved DC-to-DC conversion in the case where the DC power source is coupled to the first power converter.

In some embodiments of the present disclosure, controlling the resonant converter of the power conversion device to perform the conversion between the second DC voltage and the third DC voltage comprises: determining a predetermined resonant frequency based on a capacitance of a first resonant capacitor or a second resonant capacitor of the resonant converter, and a leakage inductance of the isolation transformer, the first resonant capacitor located on a primary side of the isolation transformer, the second resonant capacitor located on a secondary side of the isolation transformer; and controlling the resonant converter to transmit power at the predetermined resonant frequency between the primary side and the secondary side of the isolation transformer.

In some embodiments of the present disclosure, controlling the resonant converter of the power conversion device to perform the conversion between the second DC voltage and the third DC voltage further comprises: controlling a plurality of resonant conversion units connected in parallel with one another to operate in a multiphase interleaved manner, the resonant converter comprising the plurality of resonant conversation units.

In some embodiments of the present disclosure, controlling the resonant converter of the power conversion device to perform the conversion between the third DC voltage and the fourth DC voltage comprises: controlling a plurality of second half-bridge branches of the second power converter to perform multiphase interleaved DC-to-DC conversion.

The Summary is to introduce a selection of concepts in a simplified form that are further described below in the Detailed Description. This Summary is not intended to identify key features or essential features of the present disclosure as described herein, nor is it intended to be used to limit the scope of the present disclosure.

### BRIEF DESCRIPTION OF THE DRAWINGS

The above and other objectives, features, and advantages of the present disclosure will become more apparent, through the following detailed description of the example embodiments with reference to the accompanying drawings, where the same or similar reference symbols refer to the same or similar components.
Fig. 1 illustrates a schematic diagram of a charging system, a power source and an electric vehicle according to embodiments of the present disclosure.
Fig. 2 illustrates a schematic block diagram of a power conversion device according to embodiments of the present disclosure.
Fig. 3 illustrates a circuit diagram of an example implementation of a power conversion device according to embodiments of the present disclosure.
Fig. 4 illustrates a schematic circuit diagram of a power conversion device in an AC-DC mode according to embodiments of the present disclosure.
Fig. 5 illustrates a schematic circuit diagram of a power conversion device in a DC-DC mode according to embodiments of the present disclosure.
Fig. 6 illustrates a schematic circuit diagram of a power conversion device in an energy storage mode according to embodiments of the present disclosure.
Fig. 7 illustrates a schematic flowchart of a method for controlling a power conversion device according to embodiments of the present disclosure.
Fig. 8 illustrates a schematic flowchart of a process of controlling a resonant converter of a power conversion device according to embodiments of the present disclosure.
Fig. 9 illustrates a schematic graph of comparing voltage-current characteristic curves of an electric vehicle charging system according to embodiments of the present disclosure and those of legacy systems.
Fig. 10 illustrates a schematic graph of an efficiency curve of an electric vehicle charging system according to embodiments of the present disclosure.

### DETAILED DESCRIPTION OF IMPLEMENTATIONS

Reference will now be made to the drawings to describe in detail the embodiments of the present disclosure. Although some embodiments of the present disclosure are shown in the drawings, it would be appreciated that the present disclosure could be implemented in various forms, which should not be confined to the embodiments as described herein. Rather, those implementations are provided to make the present disclosure more thoroughly and completely, and enable the scope of the present disclosure to be fully conveyed to those skilled in the art. Without departing from the spirits and the protection scope of the present disclosure, those skilled in the art could acquire an alternative technical solution from the following description.

As used herein, the term "include" and its variants are to be read as open terms that mean "includes, but is not limited to." Unless indicated otherwise, the term "or" is to be read as "and/or." The term "based on" is to be read as "based at least in part on." The terms "an example embodiment" and "an embodiment" are to be read as "at least one example embodiment." Other explicit or implicit definitions may be included hereinafter.

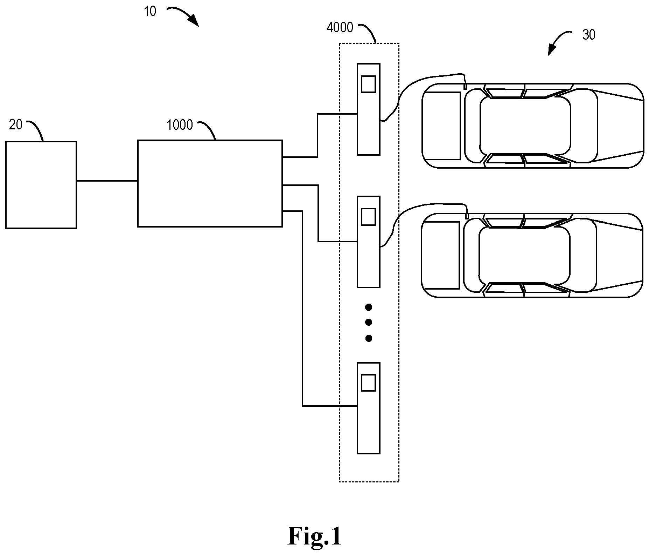

Fig. 1 illustrates a schematic diagram of a charging system 10, a power source 20 and an electric vehicle 30 according to embodiments of the present disclosure. As shown therein, the charging system 10 is coupled between the power source 20 and at least one electric vehicle 30, to convert power from the power source 20 and output the converted power to the electric vehicle 30. By way of example, the power source 20 may be utility grid, a battery, a supercapacitor, a power generation device (e.g. a photovoltaic or wind power generation device), a power supply device including a power converter and connected to other power source, or other power source of any appropriate type, and the electric vehicle 30 may be a pure electric vehicle, a hybrid vehicle, or other suitable type of vehicle with a rechargeable energy storage device.

According to embodiments of the present disclosure, the charging system 10 may include a power conversion device 1000, and a charging interface 4000 coupled to the power conversion device 1000 to output converter power. For example, the charging interface 4000 may be a charging pile with a charging plug, and by means of the charging plug and the charging interface 4000, the power conversion device 1000 is connected to an electric vehicle 30 to be charged. It would be appreciated that, in addition to the charging pile, the charging interface 1000 may be other interface device of any appropriate type. Moreover, the charging system 10 could be implemented more than this, which could be implemented in other appropriate manner. For example, the power conversion device 1000 may be integrated in a charging pile, or integrated with the charging interface 4000 in other manner.

As discussed above, the charging system generally needs to convert power from a power source and output the converted power to an electric vehicle to be charged. To this end, the power conversion device of the conventional charging system is provided with an LLC circuit to provide an isolation function. However, the LLC circuit can reach the optimal efficiency only in a resonant mode, which limits the voltage gain of the LLC circuit. In addition, the DC power distribution network of the charging system needs to maintain a relatively stable DC bus voltage because the bus voltage needs to be applied to the battery and other power modules. This further restricts the voltage gain of the LLC stage of the power conversion device. The legacy charging system and the power conversion device thereof are not suitable for outputting large rated power, and have limited input voltage and output voltage ranges.

The embodiments of the present disclosure provide an improved power conversion device and a control method thereof, and a charging system including the power conversion device. In the improved power conversion device, there is provided a three-stage converter including a first power converter, a second power converter, and a resonant converter. As controlled by the controller, the first power converter and the second power converter provide a voltage regulation function, and the resonant converter operates in the resonant mode to provide an isolation function. In this way, the resonant converter can operate at a fixed resonant frequency in the most efficient state, and in the case where high efficiency is kept, the first power converter and the second power converter can expand significantly the input voltage and output voltage ranges, such that the power conversion device and the charging system can be applied to more applications and scenarios.

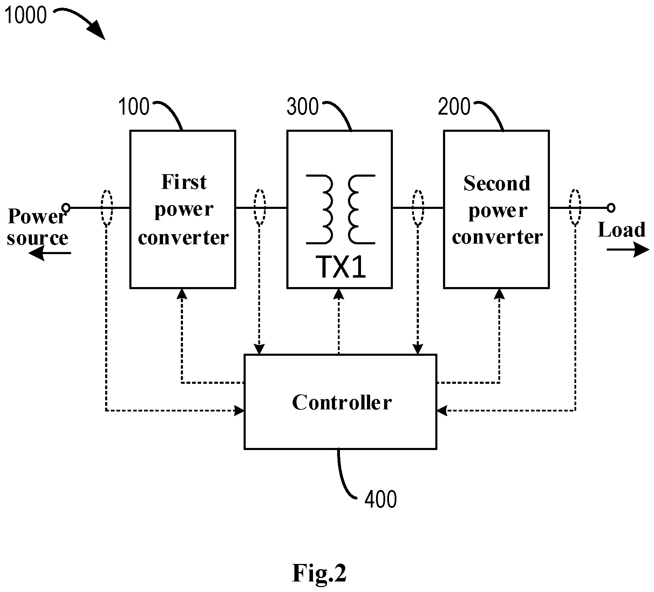

Fig. 2 illustrates a schematic block diagram of the power conversion device 1000 according to embodiments of the present disclosure. As shown therein, the power conversion device 1000 includes a first power converter 100, a second power converter 200, and a resonant converter 300 coupled between the first power converter 100 and the second power converter 200, where the resonant converter 300 includes an isolation transformer TX1. Only by way of example, the first power converter 100 may be a power converter with at least one of a rectification function, a DC boost function, and a power factor correction (PFC) function, the second power converter 200 may be a power converter with a DC step-down converter (to adjust the output voltage to an extremely low output voltage), and the resonant converter 300 may include a CLLC circuit including an isolation transformer, where the CLLC circuit may provide an isolation function between the power source and the load, and transmit power at a constant resonant power between a primary side and a secondary side of the isolation transformer.

According to the embodiments of the present disclosure, the power conversion device 1000 further includes a controller 400 coupled to the first power converter 100, the second power converter 200, and the resonant converter 300. By way of example, the controller 100 may send a control signal to the first power converter 100, the second power converter 200, and the resonant converter 300. For example, the controller 100 can control ON and OFF of power switches in the first power converter 100, the second power converter 200, and the resonant converter 300, to thus implement desired power conversion in the power conversion device 1000. It would be appreciated that the controller 400 may be implemented in multiple manners. For example, the controller 400 may be implemented in the form of a controller with a computing and processing capability, implemented in the form of an analog circuit and/or a digital circuit, or implemented in a combination of the above forms.

According to the embodiments of the present disclosure, the controller 400 is configured to control, based on voltage information associated with the power conversion device 1000, the first power converter 100 to perform conversion between an AC voltage or a first DC voltage and a second DC voltage. By way of example, the power conversion device 1000 may be provided therein with sensing devices for measuring electrical quantities such as voltage, current, and the like. The controller 400 can acquire, from those sensing devices, voltage information associated with the power conversion device 1000. However, acquiring the voltage information associated with the power conversion device 1000 could be implemented more than this, i.e., it could be implemented in other appropriate manner. For example, voltage information is received from an external device, input by an operator, or acquired in a combination of multiple manners. After analyzing and processing the voltage information, the controller 400 can appropriately control the first power converter 100, to convert the AC voltage input from the AC power source to the first power converter 100 into the second DC voltage, or convert the first DC voltage input from the DC power source to the first power converter 100 into the second DC voltage. In this way, regulating the voltage at the power source side can be implemented, such that the first power converter 100 can be applied to a broader power source voltage or input voltage range, for example, 500 V to 900V

According to embodiments of the present disclosure, the controller 400 controls the resonant converter 300 to operate at a predetermined resonant frequency to perform conversion between the second DC voltage and the third DC voltage. Specifically, the resonant converter 300 is controlled to operate in a resonant mode. In other words, the resonant converter 300 transfers power across the isolation transformer at the resonant frequency inherent to the resonant circuit, such that the resonant converter 300 can maintain optimal operating efficiency. In the case, the resonant converter 300 can maintain high efficiency while providing the isolation function. In some embodiments of the present disclosure, the ratio between the second DC voltage and the third DC voltage is of a fixed value, and associated with the transformation ratio of the isolation transformer. By way of example, in the case where the resonant converter 300 includes a CLLC circuit, the overall voltage gain of the CLLC circuit is dependent on the transformation ratio of the isolation converter (i.e., the turns ratio of the primary winding to the secondary winding of the isolation transformation) and the circuit voltage gain of the CLLC circuit. As the circuit voltage gain of the CLLC circuit in the resonant mode is substantially 1, the overall voltage gain in the resonant mode is substantially equal to the transformation ratio of the isolation converter, and has a fixed value. However, if the CLLC circuit need to perform the voltage regulation according to the condition of the input or output voltage, the CLLC circuit is set to a non-resonant mode where a higher circuit voltage gain is needed, which will remarkably reduce the efficiency of the CLLC circuit. Accordingly, by maintaining the overall voltage gain of the resonant converter 300 in a fixed value, the resonant converter 300 need not provide a voltage regulation function for different input and/or output voltages, which is helpful in maintaining the resonant converter 300 in the resonant mode at the optimal efficiency.

According to the embodiments of the present disclosure, the controller 400 controls, based on the voltage information mentioned above, the second power converter 200 to perform conversion between the third DC voltage and a fourth DC voltage. By way of example, the second power converter 200 is used to provide the voltage regulation function at the load side, to provide desired voltage to a load such as an energy storage device of an electric vehicle, and the like. In this way, the second power converter 200 can be applied to a broader load or output voltage range, for example, 200V to 1000V

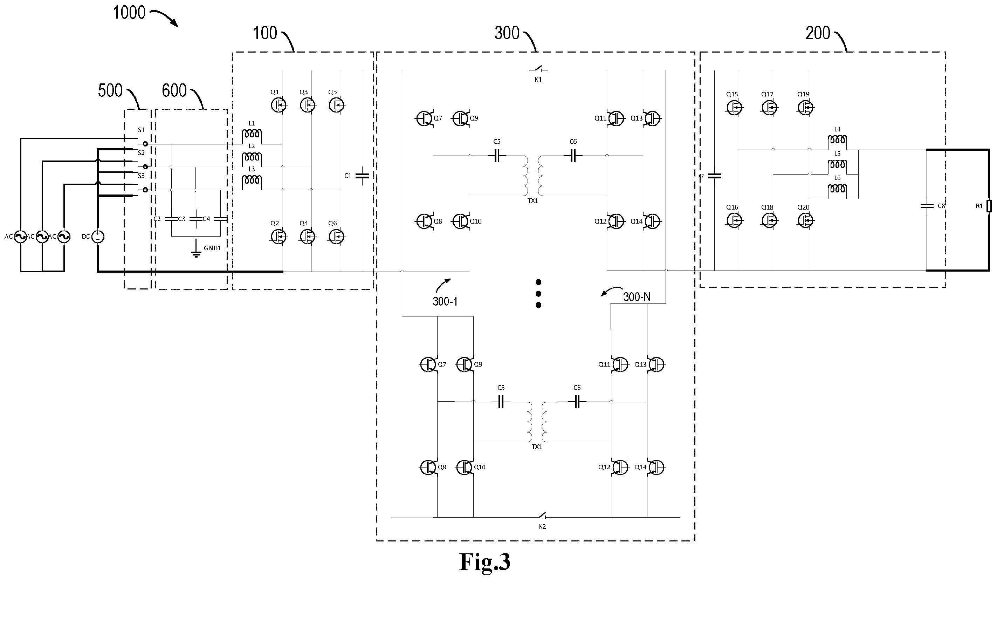

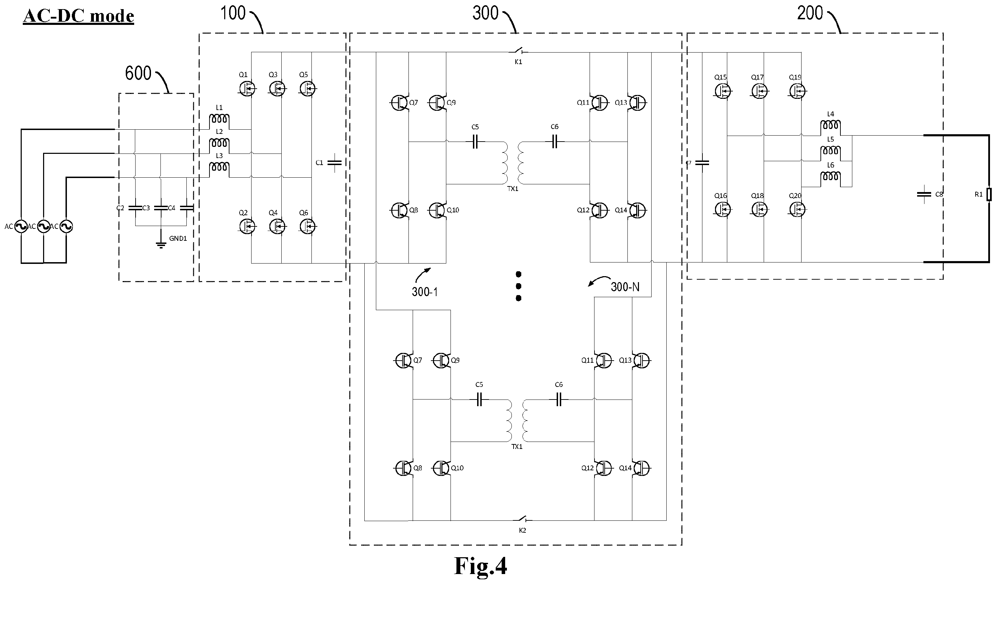

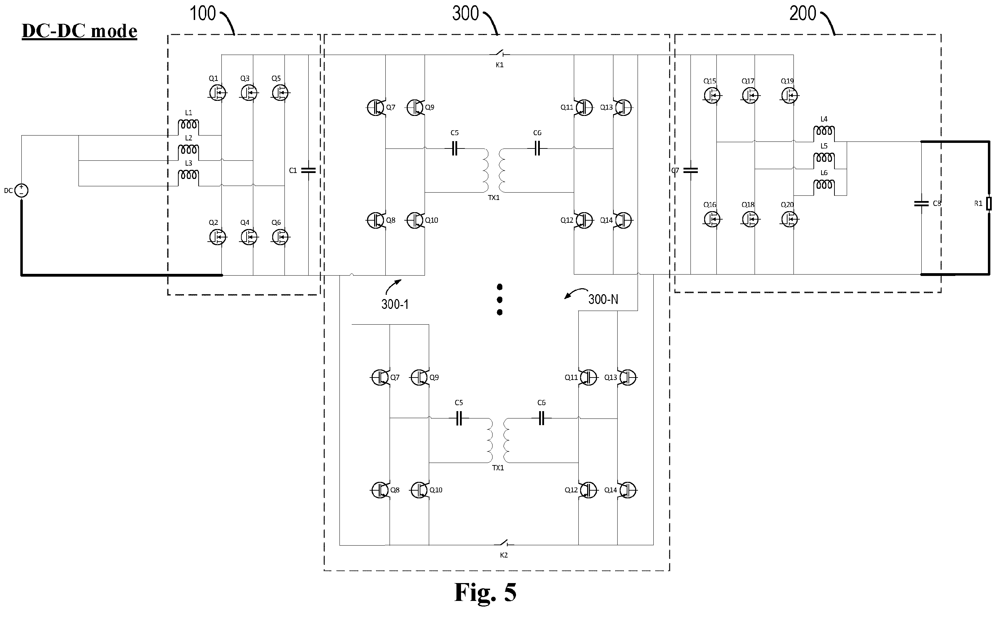

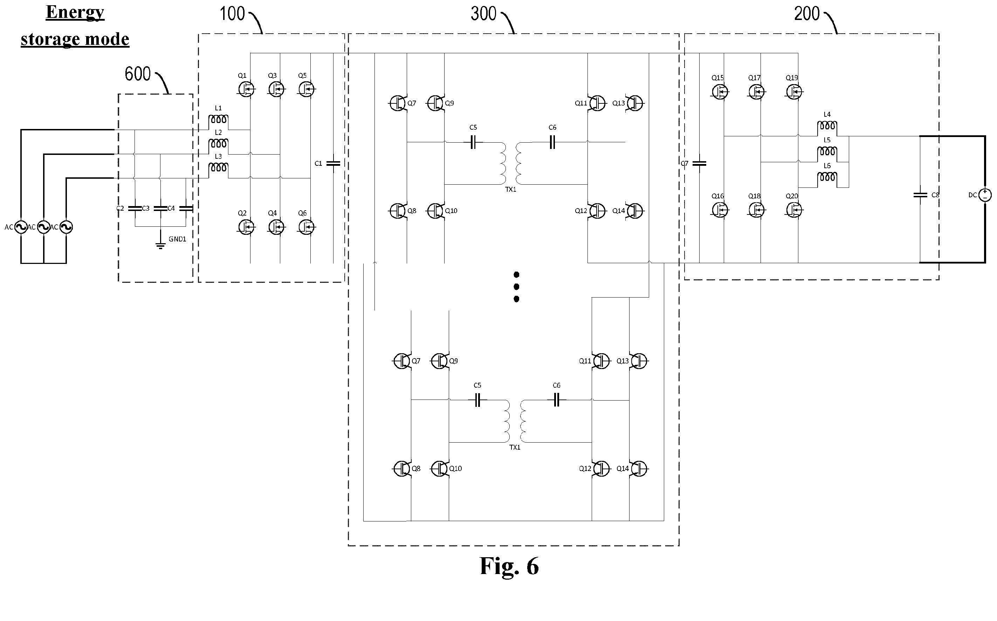

Fig. 3 illustrates a circuit diagram of an example implementation of the power conversion device 1000 according to embodiments of the present disclosure. In addition, Fig. 4 illustrates a schematic circuit diagram of the power conversion device 1000 in an AC-DC mode, Fig. 5 illustrates a schematic circuit diagram of the power conversion device 1000 in a DC-DC mode, and Fig. 6 illustrates a schematic circuit diagram of the power conversion device 1000 in an energy storage mode. By way of example, the power conversion device 1000 can output power from an AC power source (e.g. a three-phase AC grid) to a rechargeable energy storage device of an electric vehicle when in the AC-DC mode, can output power from a DC power source (e.g. a photovoltaic power generator, a wind power generator, or independent energy storage equipment) to a rechargeable energy storage device of an electric vehicle when in the DC-DC mode, and can transmit DC power reversely (i.e., transmit DC power from the right to the left in Fig. 6) from the DC power source (e.g. independent energy storage equipment, a photovoltaic power generator, or a wind power generator) to the AC power source such as an AC grid, or the like, when in the energy storage mode. Moreover, in the AC-DC mode, the power conversion device 1000 can transmit power energy reversely, i.e., it can feed the power energy in the electric vehicle back to the AC grid, which is also referred to as V2G (vehicle to grid) application or function that is helpful to improve the stability of the utility grid by using idle energy in electrical vehicles.

In some embodiments of the present disclosure, the power conversion device 1000 includes a switch assembly 500 coupled to the first power converter 100 and configured to switchably couple the AC or DC power source to the first power converter 100 to respectively provide the AC voltage or the first DC voltage. By way of example, the switch assembly 500 may be a switch of any appropriate type, including, but not limited to, an electric switch, a semiconductor switch device, or the like. By switching on or off the switch in the switch assembly 500, power sources of different types can be coupled to the power conversion device 1000, as required, thus broadening the application scenario range of the power conversion device 1000 and the charging system.

In some embodiments of the present disclosure, as shown in Figs. 3 and 4, in the case where the AC power source is coupled to the first power converter 100, the controller 400 is configured to control the first power converter 100 to perform AC-to-DC conversion, and power factor correction for the AC-to-DC conversion. For example, by operating the switch assembly 500, the AC power source can be coupled to the first power converter 100, and the first power converter 100 can rectify and regulate the AC voltage. In addition, the first power converter 100 can perform power factor correction in the process of rectification and voltage regulation. Specifically, the controller 400 can control the first power converter 100, to cause the input voltage of the first power converter 100 to be at the same, or substantially the same, phase as the input current. Therefore, the power conversion device 1000 and the charging system can receive AC input voltage in a broader range, and can avoid and mitigate the impact of harmonics and reactive power caused by rectification on the utility grid, thus improving the power factor of the charging system. In some embodiments, the AC power source includes a three-phase AC power source, or a single-phase AC power source. Specifically, by setting the switch assembly 500 appropriately, the three phases or the single phase of the AC grid can be selectively coupled to the power conversion device 1000. This can provide a more flexible power supply method and have more application scenarios.

In some embodiments of the present disclosure, as shown in Figs. 3 and 5, in the case where the DC power supply is coupled to the first power converter 100, the controller 400 is configured to control the first power converter 100 to perform DC-to-DC conversion. For example, the first power converter 100 can perform DC-to-DC boost conversion. In this way, it can be achieved to regulate DC input voltage in a broader range.

In some embodiments of the present disclosure, the first power converter 100 includes a plurality of first half-bridge branches. By way of example, the first power converter 100 may include a half-bridge branch comprised of power switching devices Q 1 and Q2, a half-bridge branch comprised of power switching devices Q3 and Q4, and a half-bridge branch comprised of power switching devices Q5 and Q6. In addition, the first power converter 100 may further include inductors L1, L2, and L3. Thereby, when the three-phase AC power source is coupled to the first power converter 100, the plurality of half-bridge branches comprised of power switching devices Q1 through Q6 can serve as a rectifier to rectify the three-phase AC power to DC power, and further, the inductors L1 through L3 can serve as a PFC inductor to implement a PFC operation, thus increasing the power factor of the power conversion device 1000. In some embodiments, in the case where the DC power source is coupled to the first power converter 100, the controller 400 is configured to control the plurality of first half-bridge branches to perform multiphase interleaved DC-to-DC conversion. By way of example, by means of the switch assembly 500, the inductors L1, L2, and L3 connected to the respective half-bridge branches can be all connected to the DC power source. In this way, the plurality of first half-bridge branches can form a multiphase boost circuit, and ON and OFF of the power switching devices in the respective half-bridge branches can be thus controlled in a multiphase interleaved manner. For example, the ON periods of the power switching devices Q1, Q3 and Q5 are staggered from one another. Accordingly, ripples caused by ON and OFF in the output of the first power converter 100 can be eliminated effectively.

In some embodiments of the present disclosure, the power conversion device 1000 further includes a filter 600 coupled between the AC power source and the first power converter 100. For example, an additional switch may be provided for the filter 600, to couple the filter 600 between the AC power source and the first power converter 100 when the AC power source is coupled to the first power converter 100, and decouple the filter 600from the line between the AC power source and the first power converter 100 when the DC power source is coupled to the first power converter 100. With the arrangement of the filter 600, harmonics can be effectively filtered out of the line.

In some embodiments of the present disclosure, the resonant converter 300 includes a first bridge circuit and a first resonant capacitor C5 located on the primary side of the isolation transformer TX1, and a second bridge circuit and a first resonant capacitor C6 located on the secondary side of the isolation transformer TX1. By way of example, the first bridge circuit may be formed by power switching device Q7, Q8, Q9, and Q10, and the second bridge circuit may be formed by power switching devices Q11, Q12, Q13, and Q14. In the AC-DC mode and the DC-DC mode where the AC power source and the DC power source charge a load, the first bridge circuit acts as an inverter to generate AC on the primary side of the isolation transformer TX1, and the second bridge circuit acts as a rectifier to rectify the AC to DC on the secondary side of the isolation transformer TX1. In the energy storage mode where the photovoltaic power generator, the wind power generator, or the independent energy storage equipment feeds power back to the AC grid, or in the AC-DC mode where the electric vehicle feeds power back to the AC grid, since the energy is transferred reversely, the first bridge circuit is a rectifier while the second bridge circuit is an inverter.

In some embodiments of the present disclosure, the controller 400 is configured to determine a predetermined resonant frequency based on the capacitance of the first resonant capacitor C5 or the second resonant capacitor C6, and the leakage inductance of the isolation transformer TX1, and control the resonant converter 300 to transfer power at the predetermined resonant frequency between the primary side and the secondary side of the isolation transformer TX1. Specifically, since the resonant converter 300 provides only the isolation function, without the need for regulating voltage in a great range, the resonant converter 300 can always operate at a fixed resonant frequency. In the case, the extra resonant inductors can be removed, and the leakage inductance of the isolation transformer TX1 can be used as the resonant inductance, to effectively reduce the number of magnetic components. For example, in the AC-DC mode, when the power is transferred from the AC grid to the vehicle, the resonant frequency of the resonant circuit is determined based on the capacitance of the first resonant capacitor C5 and the leakage inductance of the isolation transformer TX1, and when the power is transferred reversely from the vehicle to the AC grid, the resonant frequency of the resonant circuit is determined based on the capacitance of the second resonant capacitor C6 and the leakage inductance of the isolation transformer TX1. In an embodiment, the first bridge circuit and the second bridge circuit in the resonant converter 300 includes an insulated-gate bipolar transistor (IGBT). For example, a part, or all, of the power switching devices Q7 through Q14 may be IGBTs. In this way, the resonant conversion circuit such as a CLLC circuit, or the like, can be simply and reliably maintained at a fixed resonant frequency, and optimization of magnetic performance and thermal management can be achieved at a low cost.

In some embodiments of the present disclosure, the resonant converter 300 includes a plurality of resonant conversion units connected in parallel to one another. By way of example, each resonant unit may include a corresponding isolation transformer TX1, a first bridge circuit, a second bridge circuit, a first resonant capacitor C5, and a second resonant capacitor C6, and the plurality of resonant units are connected in parallel to a DC bus. In some embodiments, the controller 400 is configured to control the plurality of resonant conversion units to operate in a multiphase interleaved manner. For example, the power switching devices of the plurality of resonant conversion units are switched on and off in a phase-staggered manner (i.e., the ON and OFF periods thereof are staggered from one another). Therefore, ripples generated due to switch-on and switch-off can be reduced effectively. It would be appreciated that the number of resonant conversion units may be set as required, which may be any appropriate number, for example, 1, 2, 3, or more.

In some embodiments, the second power converter 200 includes a plurality of second half-bridge branches. By way of example, the second power converter 200 may include a half-bridge branch comprised of power switching devices Q15 and Q16, a half-bridge branch comprised of power switching devices Q17 and Q18, and a half-bridge branch comprised of power switching devices Q19 and Q20. In addition, the first power converter 100 may further include inductors L4, L5 and L6. In some embodiments, the controller 400 is configured to control the plurality of second half-bridge branches to perform multiphase staggered DC-to-DC conversion. By way of example, the plurality of second half-bridge branches can form a multiphase staggered step-down circuit, and the power switching devices of those second half-bridge branches therefore can be switched on and off in the phase-staggered manner, to thus effectively reduce ripples generated due to switch-on and off.

In some embodiments of the present disclosure, the resonant converter 300 includes bypass switches K1 and K2 coupled between the first power converter 100 and the second power converter 200. By way of example, the bypass converters K1 and K2 may be relays, or other suitably types of switches. As shown in Figs. 4 and 5, in the AC-DC mode and the DC-DC mode, since the AC or DC power source needs to charge an electric vehicle, the power conversion device 1000 is required to provide an isolation function. Therefore, the bypass switches K1 and K2 are switched off, and the resonant conversion units of the resonant converter 300 are not bypassed. As shown in Fig. 6, in the energy storage mode, considering that the photovoltaic power generator, the wind power generator, or the independent energy storage equipment feeds power back to the AC grid via the power conversion device 1000, the power conversion device 1000 is only required to provide the power conversion function, without the isolation function. In the case, the bypass switches K1 and K2 are switched on, the first power converter 100 is coupled to the second power converter 200, and the resonant conversion units of the resonant converter 300 are all bypassed accordingly. In this way, the circuit providing the isolation function can be bypassed in a simple manner, thereby improving the overall efficiency of the system.

In the embodiments of the present disclosure, the resonant converter can operate efficiently at a constant resonant frequency, and since the converter is kept to operate efficiently, the cooling design of the system can be simplified, to thus reduce the cost. In addition, the first power converter and the second power converter in the three-stage converter can regulate voltage at the input and output sides, greatly expanding the applicable input voltage and output voltage ranges and increasing the rated power level. The solution according to the present disclosure can be applied to various types of power sources, and can enable bidirectional power transmission, which is beneficial to implement the V2G application and allow the power conversion device and the electric vehicle to play multiple roles of, for example, stabilizing the power system, and assisting in power generation and energy storage. Further, by arranging bypass switches in the resonant converter, the present disclosure can be applied to the application scenarios where isolation is not needed, and can improve the system efficiency by bypassing the resonant circuit. The solution according to the present disclosure can be implemented at a low cost by means of a simple structure and control method, and can upgrade the high-voltage electric vehicle charger or charging system with mirror adjustments, to make it possible to share the same printed circuit board.

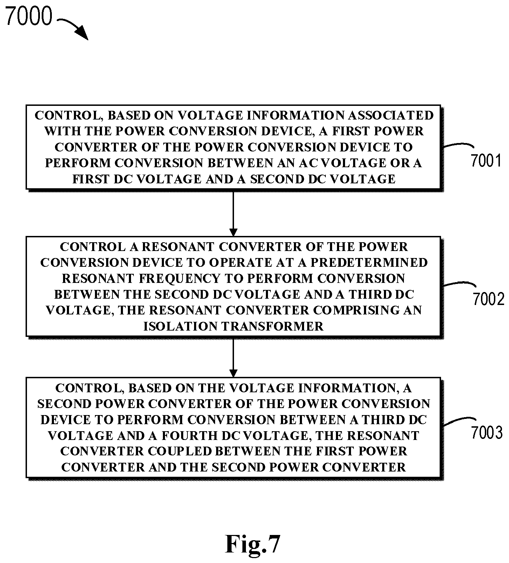

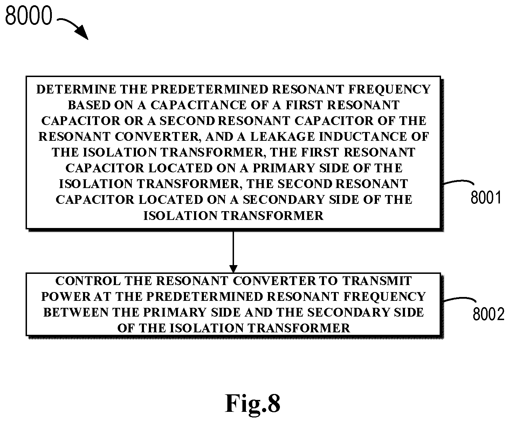

With reference to Figs. 1 through 6, detailed description has been provided above about the power conversion device 1000, and the charging system 10 including the same according to the present disclosure. Hereinafter, reference will be made to Figs. 7 and 8 to describe the method of controlling the power conversion device 1000 according to the present disclosure.

Fig. 7 illustrates a schematic flowchart of a method 7000 for controlling the power conversion device 1000 according to embodiments of the present disclosure. The method 7000 can be implemented in the charging system 100 in Fig. 1, and can be executed by the controller 400 in Fig. 2. It would be appreciated that the respective aspects described above with reference to Figs. 1 through 6 can be applied to the method 7000. For discussion, the method 7000 will be described with reference to Figs. 1 through 6.

At block 7001, the controller 400 controls, based on voltage information associated with the power conversion device 1000, the first power converter 100 of the power conversion device 1000 to perform power conversion between an AC voltage or a first DC voltage and a second DC voltage. In some embodiments, in the case where the AC power source is coupled to the first power converter 100, the controller 400 controls the first power converter 100 to perform AC-to-DC conversion, and power factor correction for the AC-to-DC conversion. In some embodiments, in the case where the DC power source is coupled to the first power converter 100, the controller 400 controls the first power converter 100 to perform DC-to-DC conversion. In some embodiments, in the case where the DC power source is coupled to the first power converter, the controller 400 controls a plurality of first half-bridge branches of the first power converter 100 to perform multiphase interleaved DC-to-DC conversion.

At block 7002, the controller 400 controls the resonant converter 300 of the power conversion device 1000 to operate at a predetermined resonant frequency to perform conversion between the second DC voltage and a third DC voltage, and the resonant converter 300 includes an isolation transformer TX1. In some embodiments, the controller 400 controls a plurality of resonant conversion units connected in parallel to one another to operate in a multiphase staggered manner, and the resonant converter 300 includes a plurality of resonant conversion units.

At block 7003, the controller 400 controls, based on voltage information, the second power converter 200 of the power conversion device 1000 to perform conversion between the third DC voltage and a fourth DC voltage, and the resonant converter 300 is coupled between the first power converter 100 and the second power converter 200. In some embodiments, the controller 400 controls a plurality of half-bridge branches of the second power converter 200 to perform multiphase interleaved DC-to-DC conversion.

Fig. 8 illustrates a schematic flowchart of a process 8000 of controlling the resonant converter 300 of the power conversion device 1000 according to embodiments of the present disclosure.

At block 8001, the controller 400 determines the predetermined resonant frequency based on a capacitance of a first resonant capacitor C5 or a second resonant capacitor C6 of the resonant converter 300, and a leakage inductance of the isolation transformer TX1, where the first resonant capacitor C5 is located on the primary side of the isolation transformer TX1, and the second resonant capacitor C6 is located on the secondary side of the isolation transformer TX1.

At block 8002, the controller 400 controls the resonant converter 300 to transmit power at the predetermined resonant frequency between the primary side and the secondary side of the isolation transformer TX1.

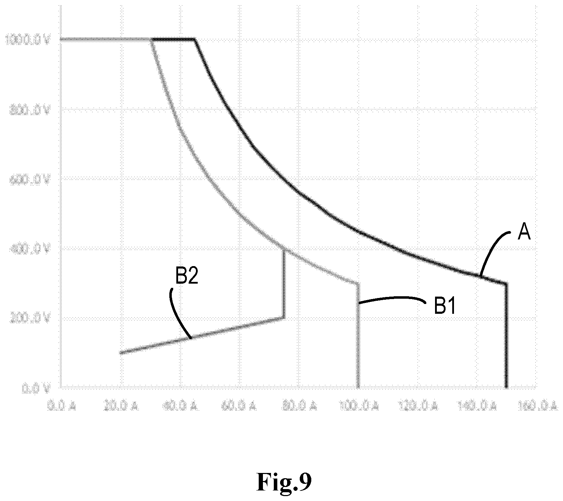

Fig. 9 illustrates a schematic graph of comparing voltage-current characteristic curves of an electric vehicle charging system according to embodiments of the present disclosure and those of legacy systems. The voltage-current curve A corresponds to the charging system according to the embodiments of the present disclosure, which has a rated power of 45kW. The voltage-current curves B1 and B2 correspond to two legacy systems, each of which uses an LLC circuit as the DC-to-DC conversion stage and has a rated power of 30kW. As shown therein, from the comparison with the characteristic curves of the legacy systems, it could be learned that the charging system according to the embodiments of the present disclosure can expand the output current range in the case of a low voltage.

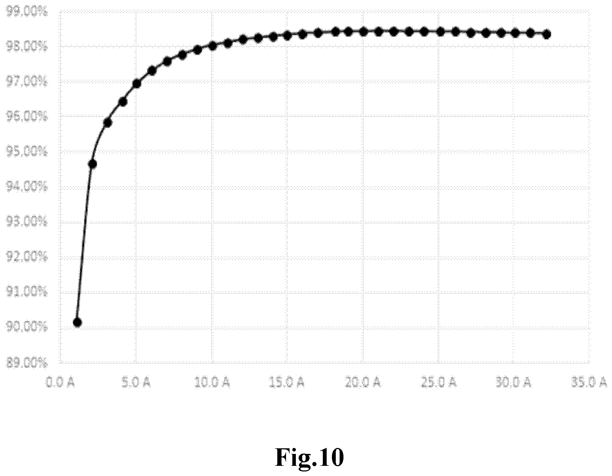

Fig. 10 illustrates a schematic graph of an efficiency curve of an electric vehicle charging system according to embodiments of the present disclosure. As shown therein, when the load is changed from light load of 20% to full load, the efficiency rises to greater than 97%, and may be increased further in the case of using better switching devices such as Sic MOSFETs. As could be seen therefrom, the solution of the present disclosure is highly efficient, and greatly flexible in terms of function, which is an efficient and flexible solution for 50kW vehicle chargers and megawatt-level power stations.

It would be appreciated by those skilled in the art that the respective steps of the method of the present disclosure, as described above, may be implemented by general-purpose computing device(s); they may be clustered on a single computing device, or distributed over a network comprised of a plurality of computing devices; alternatively, they may be implemented by program code executable by a computing device such that they can be stored in a storage device to be executed by the computing device, or they may be made into individual integrated circuit modules, or a plurality of modules or steps therein may be made into a single integrated circuit module. As such, the present disclosure is not limited to any specific combination of hardware and software.

It is to be understood that, although some devices or sub-devices of the apparatus have been mentioned above, such division is only provided exemplarily, rather than restrictively. In fact, according to embodiments of the present disclosure, features and functions of two or more devices as described above may be implemented in a single device. In turn, features and functions of a single device as described above may be further divided to be implemented by multiple devices.

The above is only description about optional embodiments of the present disclosure, without suggesting any limitation to the present disclosure, and it is apparent to those skilled in the art that the present disclosure may cover various modifications and variations. Within the spirits and principle of the present disclosure, any modification, equivalent substitution, improvement, and the like, shall fall into the protection scope thereof.

## Claims

1. A power conversion device (1000), comprising:
a first power converter (100) and a second power converter (200);
a resonant converter (300) coupled between the first power converter (100) and the second power converter (200), the resonant converter (300) comprising an isolation transformer (TX1); and
a controller (400) coupled to the first power converter (100), the second power converter (200), and the resonant converter (300), the controller (400) configured to:
control, based on voltage information associated with the power conversion device (1000), the first power converter (100) to perform conversion between an AC voltage or a first DC voltage and a second DC voltage;
control the resonant converter (300) to operate at a predetermined resonant frequency to perform conversion between the second DC voltage and a third DC voltage; and
control, based on the voltage information, the second power converter (200) to perform conversion between the third DC voltage and a fourth DC voltage.

2. The power conversion device (1000) of claim 1, wherein a ratio between the second DC voltage and the third DC voltage is of a fixed value, and associated with a transformation ratio of the isolation transformer.

3. The power conversion device (1000) of claim 1, wherein the controller (400) is configured to:
in a case where an AC power source is coupled to the first power converter (100), control the first power converter (100) to perform AC-to-DC conversion and power factor correction for the AC-to-DC conversion; and
in a case where a DC power source is coupled to the first power converter (100), control the first power converter (100) to perform DC-to-DC conversion.

4. The power conversion device (1000) of claim 3, wherein the first power converter (100) comprises a plurality of first half-bridge branches, and
wherein the controller (400) is configured to control the plurality of first half-bridge branches to perform multiphase interleaved DC-to-DC conversion in the case where the DC power source is coupled to the first power converter (100).

5. The power conversion device (1000) of claim 3, wherein the AC power source comprises a three-phase AC power source, or a single-phase AC power source.

6. The power conversion device (1000) of claim 3, further comprising:
a switch assembly (500) coupled to the first power converter (100) and configured to switchably couple the AC power source or the DC power source to the first power converter (100) to respectively provide the AC voltage or the first DC voltage.

7. The power conversion device (1000) of claim 3, further comprising:
a filter (600) coupled between the AC power source and the first power converter (100).

8. The power conversion device (1000) of claim 1, wherein the resonant converter (300) comprises a first bridge circuit and a first resonant capacitor (C5) located on a primary side of the isolation transformer (TX1), and a second bridge circuit and a second resonant capacitor (C6) located on a secondary side of the isolation transformer (TX1), and
wherein the controller (400) is configured to: determine the predetermined resonant frequency based on a capacitance of the first resonant capacitor (C5) or the second resonant capacitor (C6), and a leakage inductance of the isolation transformer (TX1), and control the resonant converter (300) to transmit power at the predetermined resonant frequency between the primary side and the secondary side of the isolation transformer (TX1).

9. The power conversion device (1000) of claim 8, wherein the first bridge circuit and the second bridge circuit comprise insulated-gate bipolar transistors.

10. The power conversion device (1000) of claim 1, wherein the resonant converter (300) comprises a plurality of resonant conversion units connected in parallel with one another, and
wherein the controller (400) is configured to control the plurality of resonant conversion units to operate in a multiphase interleaved manner.

11. The power conversion device (1000) of claim 1, wherein the second power converter (200) comprises a plurality of second half-bridge circuits, and
wherein the controller (400) is configured to control the plurality of second half-bridge branches to perform multiphase interleaved DC-to-DC conversion.

12. The power conversion device (1000) of claim 1, wherein the resonant converter (300) comprises bypass switches (K1, K2) that are coupled between the first power converter (100) and the second power converter (200), and configured to couple the first power converter (100) to the second power converter (200) when the bypass switches (K1, K2) are switched on.

13. A charging system for an electric vehicle, comprising:
the power conversion device (1000) of any of claims 1-12; and
a charging interface (4000) coupled to the power conversion device to output converted power.

14. A method for controlling a power conversion device (1000), comprising:
controlling, based on voltage information associated with the power conversion device (1000), a first power converter (100) of the power conversion device (1000) to perform conversion between an AC voltage or a first DC voltage and a second DC voltage;
controlling a resonant converter (300) of the power conversion device (1000) to operate at a predetermined resonant frequency to perform conversion between the second DC voltage and a third DC voltage, the resonant converter (300) comprising an isolation transformer (TX1); and
controlling, based on the voltage information, a second power converter (200) of the power conversion device (1000) to perform conversion between a third DC voltage and a fourth DC voltage, the resonant converter (300) coupled between the first power converter (100) and the second power converter (200).

15. The method of claim 14, wherein a ratio between the second DC voltage and the third DC voltage is of a fixed value, and associated with a transformation ratio of the isolation transformer.

16. The method of claim 14, wherein controlling the first power converter (100) of the power conversion device (1000) to perform conversion between the AC voltage or the first DC voltage and the second DC voltage comprises:
in a case where an AC power source is coupled to the first power converter (100), controlling the first power converter (100) to perform AC-to-DC conversion and power factor correction for the AC-to-DC conversion; and
in a case where a DC power source is coupled to the first power converter (100), controlling the first power converter (100) to perform DC-to-DC conversion.

17. The method of claim 16, wherein controlling the first power converter (100) to perform the DC-to-DC conversion comprises:
controlling a plurality of first half-bridge branches of the first power converter (100) to perform multiphase interleaved DC-to-DC conversion in the case where the DC power source is coupled to the first power converter (100).

18. The method of claim 14, wherein controlling the resonant converter (300) of the power conversion device (1000) to perform the conversion between the second DC voltage and the third DC voltage comprises:
determining the predetermined resonant frequency based on a capacitance of a first resonant capacitor (C5) or a second resonant capacitor (C6) of the resonant converter (300), and a leakage inductance of the isolation transformer (TX1), the first resonant capacitor (C5) located on a primary side of the isolation transformer (TX1), the second resonant capacitor (C6) located on a secondary side of the isolation transformer (TX1); and
controlling the resonant converter (300) to transmit power at the predetermined resonant frequency between the primary side and the secondary side of the isolation transformer (TX1).

19. The method of claim 14, wherein controlling the resonant converter (300) of the power conversion device (1000) to perform the conversion between the second DC voltage and the third DC voltage further comprises:
controlling a plurality of resonant conversion units connected in parallel with one another to operate in a multiphase interleaved manner, the resonant converter (300) comprising the plurality of resonant conversation units.

20. The method of claim 14, wherein controlling the second power converter (200) of the power conversion device (1000) to perform the conversion between the third DC voltage and the fourth DC voltage comprises:
controlling a plurality of second half-bridge branches of the second power converter (200) to perform multiphase interleaved DC-to-DC conversion.
